## Europäisches Patentamt
## European Patent Office
## Office européen des brevets

(19)

(11) Veröffentlichungsnummer: **0 026 810**
**B1**

(12)

# EUROPÄISCHE PATENTSCHRIFT

(45) Veröffentlichungstag der Patentschrift:
**20.10.82**

(51) Int. Cl.³: **C 08 J 7/04,** C 08 J 9/22,
C 08 L 25/06

(21) Anmeldenummer: **80103239.2**

(22) Anmeldetag: **11.06.80**

(54) **Verfahren zum Beschichten von Formmassen aus kleinteiligen blähfähigen Styrolpolymerisaten mit Dispersionen an sich bekannter Beschichtungsmittel und Verwendung der erhaltenen Formmassen.**

(30) Priorität: **09.08.79 DE 2932321**

(43) Veröffentlichungstag der Anmeldung:
**15.04.81 Patentblatt 81/15**

(45) Bekanntmachung des Hinweises auf die Patenterteilung:
**20.10.82 Patentblatt 82/42**

(84) Benannte Vertragsstaaten:
**AT BE DE FR GB IT NL SE**

(56) Entgegenhaltungen:
**CH-A-436 696**
**CH-A-575 818**

(73) Patentinhaber: **CHEMISCHE WERKE HÜLS AG,**
**Postfach 1320, D-4370 Marl 1 (DE)**

(72) Erfinder: **Leithäuser, Horst, Dr., Langehegge 151,**
**D-4370 Marl 1 (DE)**
Erfinder: **Osterhoff, Heinz, Kiefernstrasse 5,**
**D-4370 Marl 1 (DE)**
Erfinder: **Trukenbrod, Karl, Dr., Leunaer Strasse 32,**
**D-4370 Marl 1 (DE)**

**Verfahren zum Beschichten von Formmassen aus kleinteiligen blähfähigen Styrolpolymerisaten mit Dispersionen an sich bekannter Beschichtungsmittel und Verwendung der erhaltenen Formmassen**

Blähfähige, kleinteilige Styrolpolymerisate, d.h. feinteilige Styrolpolymerisate, die ein gasförmiges oder flüssiges Treibmittel enthalten, werden bekanntlich zu Formkörpern verarbeitet, indem man sie in nicht gasdicht schliessenden Formen auf Temperaturen oberhalb des Siedepunktes des Treibmittels und des Erweichungspunktes des Polymerisates erhitzt.

Üblicherweise werden die verschäumbaren Teilchen zunächst unvollständig aufgeschäumt und nach diesem als «Vorschäumen» bekannten Vorgang in einer nicht gasdicht schliessenden Form versintert, was als «Ausschäumen» bezeichnet wird.

Beim Vorschäumen sollen die Teilchen nicht versintern oder zu Agglomeraten verkleben. Ferner sollen die Teilchen beim Fördern rieselfähig bleiben und sich nicht elektrostatisch aufladen. Es ist bekannt, die Teilchen daher mit Beschichtungsmitteln zu versehen.

Als Beschichtungsmittel sind bekannt feinporige pulverförmige anorganische Verbindungen wie Siliciumdioxid, Talkum, Ton, Magnesiumoxid, Magnesiumhydroxid, Magnesiumcarbonat, ferner organische Verbindungen wie Wachse, Metallseifen, z.B. Magnesium- oder Zinkstearat, Ricinolsäureamid, Laurinsäurediethanolamid, Bisstearoyl-ethylendiamin, Ester aus Fettsäuren und Polyhydroxiverbindungen wie Glycerinstearate oder Sorbitester (DE-B 16 94 591, DE-A 23 60 901), ferner feinpulvrige thermoplastische Kunststoffe (DE-A 12 98 274).

Es ist bekannt, die Beschichtungsmittel im Trockenmischverfahren auf die blähfähigen Styrolpolymerisate aufzubringen. Diese Arbeitsweise hat den Nachteil, dass der Übergang vielfach ungleichmässig ist und schlecht haftet. Durch diese schlecht haftende Übergangsmittel können an einzelnen Stellen Überkonzentrationen auftreten, die insbesondere Agglomerate beim Vorschäumen verursachen oder die zu Ablagerungen in den Fördereinrichtungen führen. Ungleichmässige Beschichtungen bedingen beim Ausschäumen auch eine schlechte Versinterung und ergeben damit Formkörper mit geringer mechanischer Festigkeit und ungünstigen Isoliereigenschaften.

Es ist auch bekannt, das Beschichten mit emulgatorhaltigen Dispersionen von Emulsionspolymerisaten durch Ausfällen des Emulsionspolymerisates in Gegenwart der blähfähigen Styrolpolymerisate vorzunehmen (DE-A 17 94 007). Diese Arbeitsweise hat insbesondere den Nachteil, dass im Endprodukt ein Teil des Emulsionspolymerisates als Staub vorliegt, und dass die in der Dispersion enthaltenen Emulgatoren mit abgeschieden werden, was zu einer erhöhten Wasseraufnahme der Vorschaumperlen während des Vorschaumvorganges und zu einer schlechteren Rieselfähigkeit führt; ausserdem sind die aus den Vorschaumperlen hergestellten Formkörper schlechter verschweisst als bei Verwendung emulgatorfreier Vorschaumperlen.

Aus der DE-A 14 94 940 ist ein Verfahren bekannt, wonach zur flammfesten Ausrüstung von verschäumbaren Styrolpolymerisaten chlorhaltige Dispersionen aufgebracht werden und das Dispergiermittel abgedampft wird, wobei das Aufbringen der Dispersion auch durch Aufsprühen vorgenommen werden kann. Ein ähnliches Verfahren zum Aufbringen von Beschichtungsmitteln wird in der DE-A 17 69 803 beschrieben, wobei sowohl Lösungen als auch Dispersionen und auch Aufsprühen vorgeschlagen wird.

Hier ergeben sich Nachteile durch unvermeidliche Staubbildung, sowie aufgrund der Schwierigkeit, durch Aufsprühen von Dispersionen oder Lösungen gleichmässige, fest haftende Überzüge definierter Dicke zu erhalten.

In der Regel bilden sich Ablagerungen der «Sprühnebel» nicht nur auf den Perlen, sondern auch auf den Wandflächen des Behälters; ausserdem neigen Düsen leicht zum Verstopfen, was zu einer ungleichmässigen Verteilung des Beschichtungsmittels führt und einen erheblichen Überwachungsaufwand erforderlich macht.

Üblicherweise werden die Beschichtungsmittel den klassierten und gesichteten blähfähigen Styrolpolymerisaten zugemischt, weil das Fehlkorn, das üblicherweise in der Polymerisation anfällt, wieder eingesetzt wird, in beschichteter Form die Suspensionsstabilität vermindert.

Aufgabe der Erfindung ist es daher, ein Beschichtungsverfahren bereitzustellen, welches erlaubt, einen fest haftenden, gleichmässigen Überzug auf den Teilchen zu erreichen. Dabei sollen eine gute Rieselfähigkeit erhalten bleiben und ein Verkleben beim Vorschäumen verhindert werden; es sollen möglichst die sogenannten wasserfeuchten Rohperlen vor der Klassierung eingesetzt werden können, das anfallende Fehlkorn soll ohne Schaden wieder in die Suspensionspolymerisation zurückzuführen sein.

Die Lösung dieser Aufgabe gelingt, wenn man auf 30 bis 90°C erwärmte Dispersionen des Beschichtungsmittels in ein unter vermindertem Druck stehendes Mischgefäss einsaugt, in welchem sich die kleinteiligen expandierbaren Styrolpolymerisate befinden und dabei gleichzeitig mischt und trocknet.

Vorteilhaft werden die Dispersionen in auf 60 bis 90°C erwärmter Form eingesetzt.

Bekanntlich werden Eigenschaften wie Kühlzeit und Zelligkeit der expandierbaren Styrolpolymerisate negativ beeinflusst, wenn man bei Temperaturen oberhalb 35 bis 40°C beschichtet und trocknet. Andererseits wird die Rieselfähigkeit der Styrolpolymerisate verschlechtert, wenn man Beschichtungsmittel einsetzt, welche einen Erweichungspunkt unterhalb 45°C besitzen. So gelingt es auch nicht mit Hilfe von schnell laufenden Mischern, bei den dabei auftretenden höheren Temperaturen, die notwendige Menge Beschichtungsmittel in ausreichender Menge und guter Verteilung fest auf die Styrolpoylmerisate aufzubringen.

Es war daher nicht zu erwarten, dass die wesentlich wärmeren Dispersionen keine schädliche Wirkung beim Beschichten verursachen würden.

Die Dispersionen, die auch als sogenannte Pasten eingesetzt werden, haben im allgemeinen einen Feststoffgehalt von 5 bis 35, insbesondere von 10 bis 25 Gewichtsprozent. Vorzugsweise verwendet man wässrige Dispersionen, es können jedoch auch wässrig/alkoholische Dispergiermittel, vorzugsweise im Gewichtsverhältnis 50:50 bis 90:10, eingesetzt werden oder auch aliphatische Kohlenwasserstoffe; letztere sind jedoch weniger bevorzugt. Als Alkohol eignet sich besonders Methanol. Die Viskosität der Dispersionen ist ausreichend niedrig und kann innerhalb der angegebenen Temperaturbereiche auf den gewünschten Wert eingestellt werden.

Besonders vorteilhaft einzusetzende Dispersionen enthalten als Dispergiermittel Gemische aus Mono- und Distearaten des Glycerins oder den Sorbitester der Palmitinsäure, wobei vorteilhaft auch Gemische mit Metallseifen, wie Magnesiumzink- oder Calciumstearat oder Bis-stearylethylendiamin eingesetzt werden.

Die Menge der aufzubringenden Beschichtungsmittel beträgt im allgemeinen 0,05 bis 0,6, bevorzugt 0,1 bis 0,5 Gewichtsprozent, bezogen auf das expandierbare Styrolpolymerisat. Bei den gröberen Teilchen (ca. 0,9 bis 3,0 mm Durchmesser) reichen Mengen von 0,1 bis 0,2 Gewichtsprozent aus, bei den kleineren Teilchen (ca. 0,3 bis 0,9 mm Durchmesser) setzt man dagegen vorteilhaft 0,2 bis 0,6 Gewichtsprozent ein.

Blähfähige kleinteilige Styrolpolymerisate sind vorzugsweise die durch Suspensionspolymerisation erhaltenen Styrolpolymerisate, die neben Styrol kleinere Mengen copolymerisierbarer Verbindungen wie Acryl- bzw. Methacrylsäureester, Acrylnitril, Butadien oder elastomere Verbindungen wie Polybutadien, Butadien-Styrol-Copolymerisate, Ethylen-Propylen-Co- oder Terpolymerisate enthalten können. Die bekannten niedrigsiedenden Treibmittel, die vor, während oder nach der Polymerisation zugesetzt werden, sind aliphatische Kohlenwasserstoffe und/oder Halogenkohlenwasserstoffe wie Pentan, Dichlordifluormethan, Butan, d.h. organische Flüssigkeiten, die das Polymere nicht merklich lösen und deren Siedepunkt wesentlich unterhalb 100°C liegt.

Die expandierbaren Styrolpolymerisate können selbstverständlich auch flammhemmende Mittel, Antistatika, Füllstoffe, Nukleierungsmittel oder Farbstoffe enthalten.

Das Verfahren der Beschichtung eignet sich besonders vorteilhaft für den Einsatz von sogenannten wasserfeuchten Rohperlen. Das sind die nicht in die verkaufsüblichen Kornfraktionen aufgeteilten Perlen, wie sie nach der Suspensionspolymerisation, nach dem Abtrennen von der wässrigen Phase und Waschen und Abschleudern in wasserfeuchter Form anfallen. Der anhaftende Wasseranteil beträgt in diesem Falle unter 3 Gewichtsprozent, vorzugsweise liegt er zwischen 1,0 und 1,5 Gewichtsprozent.

Wie bereits ausgeführt, benötigen in der Regel die grösseren Teilchen weniger Beschichtungsmittel als Teilchen mit kleinerem Durchmesser. Es kann daher zweckmässig sein, in der Polymerisation gezielt «gröbere» und «feinere» Ansätze herzustellen. Man kann aber auch von der Möglichkeit Gebrauch machen, die Rohperlen in 2 Fraktionen (etwa > und <1 mm Durchmesser) auftrennen zu können und diese Fraktionen dann getrennt weiterverarbeiten.

Selbstverständlich ist es auch möglich, das erfindungsgemässe Verfahren zum Beschichten mit der üblichen Mischerschmierung zu kombinieren, wenn für spezielle Verarbeitungsbedingungen eine Perlfraktion mit einer höheren Konzentration an Beschichtungsmitteln erforderlich sein sollte und wenn die mit der Mischerschmierung verbundenen Nachteile zu tolerieren sind.

Nach dem Beschichten werden die in trockener Form vorliegenden Perlen klassifiziert und gesichtet. Das dabei anfallende Fehlkorn (Unter- und Übergrössen) kann ohne zu schaden in die Suspensionspolymerisation zurückgeführt werden.

Zur Beschichtung eignen sich vorteilhaft Vakuumtrockner, die auf einer Betriebstemperatur von 20 bis 35°C, vorteilhaft 25 bis 30°C, gehalten werden, und die ein gleichmässiges Umwälzen des Produktes gestatten. Sie sind mit einem oder mehreren Bodeneinlässen für die Dispersion sowie Abzugsvorrichtungen für die Dämpfe ausgerüstet. Zur Durchführung des Verfahrens wird der Trockner mit dem expandierbaren Styrolpolymerisat beschickt und ein verminderter Druck von 1 bis 100 mbar, vorteilhaft 5 bis 15 mbar, eingestellt.

Die erforderliche Menge des Beschichtungsmittels wird dann in Form einer Dispersion von unten über einen oder mehrere Stutzen eingesaugt und dabei auf die Perlen verteilt. Unter Durchmischung werden die Perlen unter vermindertem Druck getrocknet.

Die getrockneten kleinteiligen Styrolpolymerisate fallen gleichmässig mit Oberflächenmittel beschichtet an und können, falls erforderlich, anschliessend klassifiziert werden.

Folgende Beispiele und Vergleichsbeispiele zeigen die vorteilhaften Ergebnisse gegenüber dem Verfahren des Standes der Technik.

Folgende Dispersionen werden eingesetzt:

A) 325 Gewichtsteile vollentsalztes Wasser (oder Trinkwasser) werden auf 90°C erhitzt. Unter kräftigem Rühren werden 175 Gewichtsteile eines Gemisches aus Glycerinmono- und -distearat eingetragen. Nach 30 bis 60minütigem Rühren erhält man eine feinteilige Dispersion mit einem Feststoffgehalt von 35 Gewichtsprozent. Die Dispersion wird als 80°C warme Dispersion eingesetzt.

B) Unter den gleichen Bedingungen wird eine Dispersion mit 20 Gewichtsprozent Feststoffgehalt hergestellt, die mit einer Temperatur von 75°C eingesetzt wird.

C) In eine auf 60°C erhitzte Mischung aus 110 Gewichtsteilen vollentsalztem Wasser und 110 Gewichtsteilen Methanol trägt man langsam 100 Gewichtsteile eines handelsüblichen Palmitinsäureesters das Sorbit ein. Unter kräftigem Rühren, ohne zu heizen, verdünnt man langsam mit 180 Gewichtsteilen Wasser von 15°C. Die Dispersion besitzt einen Feststoffgehalt von 20 Gewichtsprozent. Sie wird bei einer Temperatur von 30°C eingesetzt.

D) In gleicher Weise wird eine Dispersion mit einem Feststoffgehalt von 35 Gewichtsprozent hergestellt, die mit einer Temperatur von 45°C eingesetzt wird.

E) 400 Gewichtsteile vollentsalztes Wasser werden auf 90°C erhitzt. Unter kräftigem Rühren werden 75 Gewichtsteile eines handelsüblichen Gemisches aus Glycerinmono- und -distearat sowie 25 Gewichtsteile Magnesiumstearat eingetragen. Unter kräftigem Rühren lässt man auf 70°C abkühlen. Die in Form einer Paste vorliegende Dispersion wird mit einem Feststoffgehalt von 20 Gewichtsprozent und mit einer Temperatur von 70°C eingesetzt.

Vergleichsbeispiel 1a–g

Trockene, verschäumbare Polystyrolperlen mit Korndurchmessern von α) 0,9 bis 2,0 mm, β) 0,5 bis 0,9 mm werden unterschiedliche Zeiten in einem Mischer vom Typ Nautamix bei Raumtemperatur mit 0,1 Gewichtsprozent eines handelsüblichen Gemisches aus Glycerinmono- und -distearat gemischt. Nach Beendigung der Mischzeit wird durch Absieben der Anteil an «freiem» Beschichtungsmittel bestimmt.

Gleiche Versuche werden bei Temperaturen von 30 bis 35°C wiederholt. Wie aus der Tabelle 1 hervorgeht, sind weniger als 50% des zugegebenen Beschichtungsmittels fest auf der Perloberfläche fixiert.

Tabelle 1

| Versuch Nr. | Perltyp | Mischzeit (min) | Misch- bzw. Prod.-temper. °C | «freies» Beschichtungs-mittel in % (bezogen auf den Einsatz) | Bemerkungen |
|---|---|---|---|---|---|
| 1a | α | 10 | 20 | 79 | sehr ungleich-mässige Beschichtung |
| 1b | β | 20 | 22 | 72 | |
| 1c | β | 30 | 23 | 67 | |
| 1d | α | 45 | 25 | 62 | hoher Staubanteil |
| 1e | α | 20 | 32 | 69 | |
| 1f | α | 30 | 32 | 62 | |
| 1g | α | 40 | 35 | 54 | |

Vergleichsbeispiel 2 gemäss DE-A 17 69 803)

Verschäumbare Polystyrolperlen (0,5 bis 0,9 mm Durchmesser) werden im gleichen Mischer wie bei dem Versuch 1 mit 0,3% des gleichen Beschichtungsmittels ausgerüstet, und zwar wird dieses während des Mischvorganges innerhalb von 4 bis 9 Minuten als Schmelze auf die Perlen gesprüht.

Ergebnis: ca. 82% des Beschichtungsmittels sind ungleichmässig auf der Perloberfläche verteilt, ca. 13% sind als Staub im Produkt enthalten, die Verluste betragen ca. 5% (Wandanbackungen und Staubverluste).

Wesentlich ist, dass durch häufige Düsenverstopfung ein Chargenbetrieb praktisch unmöglich ist.

Vergleichsbeispiel 3 (gemäss DE-A 14 94 940)

Der Versuch vom Vergleichsbeispiel 2 wird mit der Variation wiederholt, dass während des Mischvorganges eine 10%ige wässrige Dispersion zu den im Mischer vorgelegten Perlen gegeben wird. Nach 15 Minuten Mischzeit wird das Wasser mittels warmer Luft abgedampft. Mit 92% auf der Perloberfläche haftendem Beschichtungsmittel und nur 5% Staub im Produkt bei nur leichten Anbackungen im Mischer ist die Aufbringung als befriedigend gleichmässig zu betrachten. Das Abdampfen des Wassers kompliziert jedoch den diskontinuierlichen Mischvorgang erheblich, da einerseits die Mischzeiten kurz sein sollen, andererseits die Luftmengen nicht zu gross sein dürfen, damit ein Stauben wirksam verhindert wird. Ein zusätzlicher Aufwand ist die analytische Kontrolle des Trocknungsvorganges.

Beispiel 4A–E (erfindungsgemäss)

Es werden die Dispersionen A–E eingesetzt. In einen zu etwa 75% mit 20 t eingetrockneten, expandierbaren Polystyrolperlen von 0,4 bis 3,0 mm Korndurchmesser gefüllten Vakuumtrockner werden die genannten Dispersionen eingesaugt. Es herrscht dabei ein Druck von 10 bis 25 mbar. Unter weiterer Durchmischung wird etwa 4 bis 5 Stunden bei dem angegebenen Unterdruck durchgemischt und bei einer Temperatur von 30°C getrocknet.

Die Ergebnisse der Vergleichsbeispiele und der Beispiele 1A–G sind in der Tabelle 2 zusammengefasst.

Tabelle 2

| Beispiel | Dispersion | % Beschichtungsmittel insg. | auf Perloberfl. | frei | Aufbringung | Riesel-fähigkeit | Bemerkungen |
|---|---|---|---|---|---|---|---|
| 4A | A (80°C) | 0,1 | 0,1 | 0 | gleichmässig | befried. | – |
| 4B | B (75°C) | 0,2 | 0,2 | 0,01 | gleichmässig | befried. | Perlen enthalten ein Flammschutzmittel |
| 4C | C (30°C) | 0,1 | 0,1 | 0 | gleichmässig | befried. | – |
| 4D | D (45°C) | 0,2 | 0,2 | Spuren | gleichmässig | befried. | – |
| 4E | E (70°C) | 0,1 | 0,1 | Spuren | gleichmässig | gut | – |

Die Beschichtungsmittel, die nach den Beispielen erhalten werden, haften nicht nur wesentlich besser, sie sind auch gleichmässig verteilt.

Beispiel 5 (erfindungsgemäss)

Mit diesem Beispiel soll gezeigt werden, dass das bei dem Beschichtungsverfahren der Erfindung anfallende Fehlkorn ohne Schaden in der Suspensionspolymerisation wieder eingesetzt werden kann.

Tabelle 3

| Fehlkorn von Beispiel | verw. Menge Fehlkorn (<0,5; >2,5 mm) % | in den Ansatz eingebr. Menge Beschichtungsmittel % | Suspensionsstabilität und Korngrössenverteilung |
|---|---|---|---|
| 4A | 10 | 0,01 | normal |
| 4C | 5 | 0,005 | normal |
| 4E | 10 | 0,01 | normal |
| Vergleichsbeispiel 1b (Fehlkorn <0,5 mm) | 0,5 | ca. 0,4 | instabile Suspension und starke Kornvergröberung |

## Patentansprüche

1. Verfahren zum Beschichten von Formmassen aus blähfähigen kleinteiligen Styrolpolymerisaten mit Dispersionen von Beschichtungsmitteln, dadurch gekennzeichnet, dass man auf 30 bis 90°C erwärmte Dispersionen in ein unter vermindertem Druck stehendes Mischgefäss unter Verdüsen einsaugt, in welchem sich die feinteiligen expandierbaren Styrolpolymerisate befinden und dabei gleichzeitig mischt und trocknet.

2. Verfahren nach Anspruch 1, dadurch gekennzeichnet, dass man unklassierte wasserfeuchte feinteilige expandierbare Styrolpolymerisate einsetzt und diese erst nach dem Beschichten klassiert.

3. Verwendung des nach Anspruch 2 anfallenden Fehlkorns bei der Suspensionspolymerisation zur Herstellung expandierbarer Styrolpolymerisate.

4. Verwendung der nach den Ansprüchen 1 und 2 erhaltenen klassierten beschichteten Formmassen zur Herstellung von Formkörpern.

## Claims

1. A process for coating a moulding material made from an expandable finely divided styrene polymer with a dispersion of a coating material, characterised in that the dispersion which has been warmed to 30–90°C is sucked, so as to cause atomisation, into a mixing vessel which is under reduced pressure and which contains the finely divided expandable styrene polymer, thereby simultaneously causing mixing and drying.

2. A process according to claim 1, characterised in that a finely divided expandable styrene polymer which has not been graded as to size and which is moist with water is employed, and the polymer is graded as to size only after the coating operation.

3. The use of the particles of incorrect size arising in a process according to claim 2 in a suspension polymerisation process for the preparation of an expandable styrene polymer.

4. The use of the size-graded coated moulding material obtained in a process according to claim 1 or 2 for the production of a moulding.

## Revendications

1. Procédé pour revêtir des matières à mouler formées de produits de polymérisation de styrène expansibles et finement divisés avec des dispersions d'agents de revêtement, caractérisé par le fait que l'on aspire avec atomisation les dispersions chauffées entre 30 et 90°C dans un récipient de mélange soumis à une pression réduite dans lequel se trouvent les produits de polymérisation de styrène expansibles et finement divisés et que, simultanément, on mélange et on sèche.

2. Procédé selon la revendication 1, caractérisé par le fait que l'on utilise des produits de polymérisation du styrène expansibles et finement divisés, non classés, humides d'eau, et que l'on classe ceux-ci seulement après le revêtement.

3. Application du grain sortant des limites, obtenu selon la revendication 2, dans la polymérisation en suspension pour la préparation de produits de polymérisation de styrène expansibles.

4. Application des matières à mouler revêtues et classées obtenues selon les revendications 1 et 2 à la fabrication de pièces moulées.